# FASCICULE DE BREVET EUROPEEN

(11) **EP 2 411 259 B1**
(45) Date de publication et mention de la délivrance du brevet: **30.04.2014**
(21) Numéro de dépôt: 10715949.3
(22) Date de dépôt: 17.03.2010
(51) Int. Cl.: B62D 25/08, B62D 25/10

(54) **AGENCEMENT POUR UNE PARTIE AVANT DE VÉHICULE AUTOMOBILE**
ANORDNUNG FÜR DIE FRONTPARTIE EINES KRAFTFAHRZEUGS
ARRANGEMENT FOR A FRONT PORTION OF A MOTOR VEHICLE

(30) Priorité: 25.03.2009 FR 0951912
(43) Date de publication de la demande: 01.02.2012
(73) Titulaire: Renault S.A.S., 78288 Guyancourt Cedex (FR)
(72) Inventeur: DUPONT, Christophe, 62580 Vimy (FR); HOURDEL, Alain, 91470 Forges Les Bains (FR); LE ROCH, Yannick, 78610 Saint Leger en Yvelines (FR); PICHAUD, Sylvie, 91190 Gif sur Yvette (FR); VASSEUR, Nicolas, 62580 Farbus (FR)
(86) Numéro de dépôt international: PCT/FR2010/050479
(87) Numéro de publication internationale: WO 2010/109114

(56) Documents cités:
- EP-A1- 1 623 879
- EP-A2- 1 977 957
- WO-A1-2009/013416
- DE-A1-102006 059 028
- JP-A- 2001 018 837

## Description

L'invention concerne un agencement pour une partie avant de véhicule automobile.

L'invention concerne plus particulièrement un agencement pour une partie avant de véhicule automobile comportant au moins un élément de structure de caisse comprenant deux longerons sensiblement longitudinaux intermédiaires à l'extrémité desquels est fixé un élément transversal dit "face avant technique" porteur d'organes du véhicule, la partie avant portant au moins deux projecteurs du véhicule, un bouclier pare-chocs et deux butées de fermeture d'un capot associé.

On connaît de nombreux exemples d'agencements de ce type.

Le document FR 2.874.585 et EP 1977957 décrit un agencement de ce type dans lequel la face avant technique est porteuse de deux de butées de fermeture du capot associé.

L'invention part du constat que la face avant technique pourrait être utilisée pour porter un nombre plus élevé d'éléments, afin de réduire la durée d'assemblage du véhicule associé.

Ceci est notamment rendu possible par les récentes évolutions des normes de sécurité, en ce qui concerne par exemple la fixation des boucliers pare-chocs, ou le rehaussement de la position des projecteurs des véhicules afin de parer à un choc avec la tête d'un enfant.

Par ailleurs, dans le cadre d'un véhicule de type monospace, les projecteurs sont agencés selon une position élevée par rapport à l'élément de structure de caisse. Il est donc nécessaire de prévoir une face avant technique s'étendant suffisamment haut par rapport à l'élément de structure de caisse pour permettre la fixation desdits projecteurs.

Dans ce but, l'invention propose un agencement du type décrit précédemment comportant une face avant technique haute porteuse de nombreux éléments.

Dans ce but, l'invention propose un agencement du type décrit précédemment, caractérisé en ce que l'élément transversal comporte au moins deux bras supérieurs transversaux opposés s'étendant à partir d'une partie centrale, dont l'extrémité de chacun est fixée à deux éléments longitudinaux supérieurs portés par des jambes sensiblement verticales s'étendant à partir des longerons sensiblement longitudinaux intermédiaires, et en ce que chaque bras supérieurs comporte des moyens de fixation d'au moins une patte de fixation d'un projecteur associé, d'au moins un point de fixation du bouclier pare-chocs, et d'une butée de fermeture du capot.

Selon d'autres caractéristiques de l'invention :
- chaque jambe verticale est reliée par l'intermédiaire d'un tirant sensiblement transversal à au moins un élément latéral voisin de l'élément structure de caisse du véhicule, pour éviter le flambage de ladite jambe,
- le tirant est agencé verticalement sous un niveau inférieur d'un projecteur du véhicule,
- l'extrémité de chaque bras comporte une partie de fixation dite "structurelle" comportant des premiers moyens de fixation du bras à l'extrémité de l'élément longitudinal supérieur associé et des seconds moyen de fixation de la patte de fixation du projecteur sur le bras,
- les premiers moyens de fixation du bras à l'extrémité de l'élément longitudinal supérieur associé comportent un perçage sensiblement vertical, traversant l'extrémité de chaque partie structurelle de fixation, qui est destiné à recevoir une vis verticale de fixation de ladite partie structurelle de fixation sur une face supérieure de l'extrémité de l'élément longitudinal supérieur associé,
- les seconds moyens de fixation de la patte de fixation du projecteur sur le bras comportent un taraudage sensiblement vertical, formé dans chaque partie structurelle de fixation, qui est destiné à recevoir une vis verticale de fixation traversant la patte horizontale de fixation du projecteur,
- l'agencement comporte un moyen d'alignement de la partie de fixation et de la patte du projecteur qui est constitué d'un pion, faisant saillie à partir d'une face supérieure de l'extrémité de l'élément longitudinal supérieur associé, qui traverse un évidement de chaque partie structurelle de fixation et est reçu au moins en butée contre une face verticale dudit évidement, et dont l'extrémité est reçue dans un trou oblong conforme formé dans la patte horizontale de fixation du projecteur,
- l'évidement de chaque partie structurelle de fixation s'étend à partir d'un bord vertical de chaque partie structurelle et présente la forme générale d'un "V" dont les bords verticaux se rejoignent suivant une portée verticale pour former un logement de courbure correspondant sensiblement au diamètre du pion, la portée verticale formant la face verticale de butée dudit évidement,
- la partie de fixation structurelle comporte des moyens de fixation d'un boîtier supérieur comportant un troisième moyen de fixation du point de fixation du bouclier pare-chocs, et un quatrième moyen de fixation d'une butée de fermeture du capot,
- chaque partie structurelle de fixation comporte au moins un évidement en forme de cadre recevant en partie centrale un fût, dans lequel est réalisé le perçage destiné à recevoir la vis de fixation de la partie structurelle sur l'élément longitudinal supérieur et qui est lié par des raidisseurs aux parois du cadre,
- le boîtier supérieur comporte au moins une paroi verticale correspondant avec un bord du cadre de chaque partie structurelle de fixation opposé au taraudage et les moyens de fixation du boîtier supérieur sur la partie structurelle de fixation comportent :
   - au moins deux pattes verticales élastiques inférieures, s'étendant dans le prolongement de la paroi verticale, dont des ergots d'extrémité sont destinés à être reçus dans des lumières conformes formées dans le bord vertical associé du cadre pour permettre une fixation du boîtier supérieur par emboîtement,
   - au moins une patte horizontale dont un perçage coïncide avec le taraudage et est destiné à être traversé par la vis de fixation du projecteur,
   - au moins une patte verticale de mise en position, qui s'étend verticalement sous le boîtier et qui est destinée à traverser le trou oblong de la patte de fixation du projecteur pour prendre appui tangentiellement sur le pion.
- le troisième moyen de fixation du point de fixation du bouclier pare-chocs comporte une première portée constituée d'un bossage qui s'étend à partir d'une face supérieure du boîtier et qui comporte un taraudage destiné à recevoir une vis traversant un perçage formé dans une paroi du bouclier pare-chocs,
- le quatrième moyen de fixation de la butée de fermeture du capot comporte une seconde portée qui s'étend sur la face supérieure du boîtier, dont deux encoches supérieures sont destinées à recevoir par emboîtement deux ergots formés à l'extrémité des bras élastiques d'un cavalier présentant sensiblement la forme d'un U inversé qui est destiné à traverser une fenêtre conforme pratiquée dans la paroi du bouclier pare-chocs et dont l'extrémité opposée de jonction des bras porte la butée de fermeture du capot.

D'autres caractéristiques et avantages de l'invention apparaîtront à la lecture de la description détaillée qui suit pour la compréhension de laquelle on se reportera aux dessins annexés dans lesquels :
- la figure 1 est une vue d'ensemble d'un agencement selon l'invention ;
- la figure 2 est une vue de détail éclatée des moyens de fixation d'une patte de fixation d'un projecteur associé, d'un point de fixation du bouclier pare-chocs et d'une butée de fermeture du capot sur l'élément transversal dit "face avant technique" de l'agencement de la figure 1 ;
- la figure 3 est une vue en coupe assemblée des moyens de fixation par le plan 3-3 de la figure 2 ;
- la figure 4 est une vue en coupe assemblée des moyens de fixation par le plan 4-4 de la figure 2.

Dans la description qui va suivre, des chiffres de référence identiques désignent des pièces identiques ou ayant des fonctions similaires.

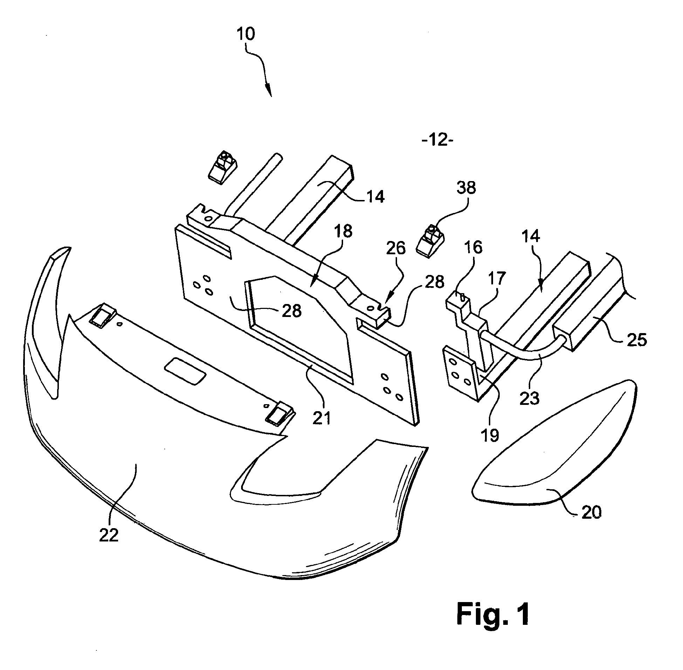

On a représenté à la figure 1 un agencement 10 pour une partie avant 12 de véhicule automobile comportant au moins un élément de structure de caisse comprenant deux longerons 14 sensiblement longitudinaux intermédiaires à l'extrémité desquels est fixé un élément transversal 18 dit "face avant technique" porteur d'organes du véhicule, la partie avant portant au moins deux projecteurs 20 du véhicule, un bouclier pare-chocs 22 et deux butées 38 de fermeture d'un capot (non représenté) associés.

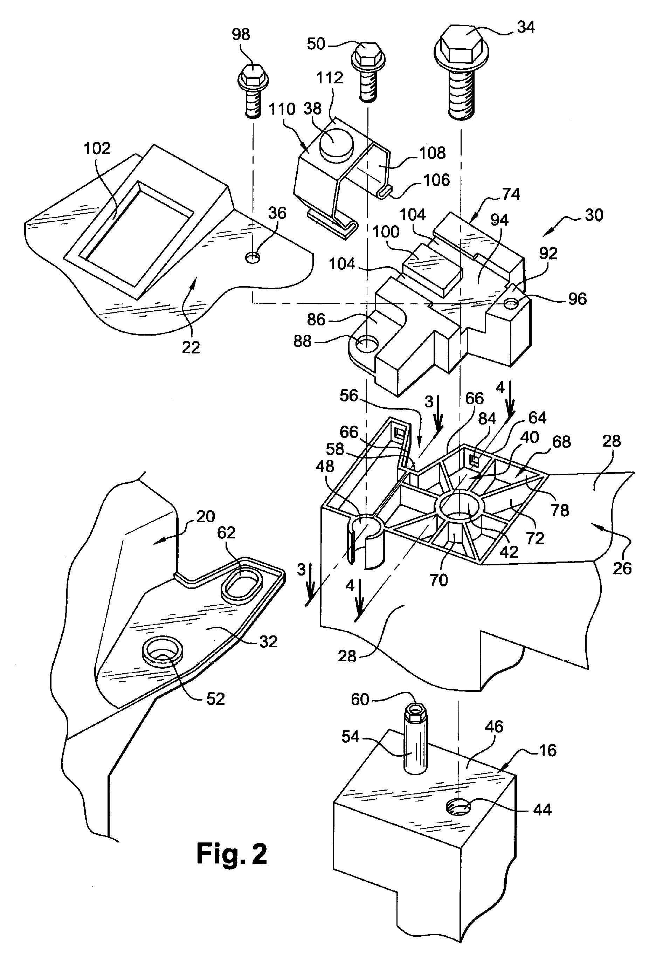

Conformément à l'invention, comme l'illustre partiellement la figure 1 et plus précisément la figure 2, l'élément 18 transversal comporte au moins deux bras supérieurs 26 transversaux opposés s'étendant à partir d'une partie centrale 21 dont l'extrémité 28 de chacun est fixée à deux éléments longitudinaux supérieurs 16 portés par des jambes 17 sensiblement verticales s'étendant à partir des longerons 14 sensiblement longitudinaux intermédiaires.

Par ailleurs, l'extrémité 28 de chaque bras supérieur 26 comporte des moyens 30 de fixation d'au moins une patte 32 de fixation d'un projecteur 20 associé, d'au moins un point 36 de fixation du bouclier pare-chocs 22, et d'une butée 38 de fermeture du capot.

Chaque jambe 17 est réalisée par emboutissage et par soudage et est soudée à l'extrémité 19 de chaque longeron 14.

De préférence, chaque jambe verticale 17 est reliée par l'intermédiaire d'un tirant 23 sensiblement transversal à au moins un élément latéral 25 voisin de l'élément de structure de caisse du véhicule, pour éviter le flambage de la jambe 17.

De préférence, le tirant 23 est agencé verticalement sous un niveau inférieur (non représenté) d'un projecteur du véhicule, ce qui correspond sensiblement à la mi-hauteur de la jambe 17.

Plus particulièrement, comme l'illustre la figure 2, l'extrémité 28 de chaque bras 26 comporte une partie 40 de fixation dite "structurelle" comportant des premiers moyens de fixation du bras 26 à l'extrémité de l'élément 16 longitudinal supérieur associé et des seconds moyens de fixation de la patte 32 de fixation du projecteur 20 sur le bras 26.

Plusieurs modes de réalisation peuvent convenir à la réalisation des premiers moyens de fixation. Toutefois, dans le mode de réalisation préféré de l'invention, les premiers moyens de fixation du bras 26 à l'extrémité de l'élément 16 longitudinal supérieur associé comportent un perçage 42 sensiblement vertical, traversant l'extrémité de chaque partie 40 structurelle de fixation, qui est destiné à recevoir une vis 34 verticale de fixation de ladite partie structurelle de fixation qui est reçue dans un perçage débouchant 44 dans une face supérieure 46 de. l'extrémité de l'élément 16 longitudinal supérieur associé.

Par ailleurs, les seconds moyens de fixation de la patte de fixation 32 du projecteur 20 sur le bras 26 comportent un taraudage 48 sensiblement vertical, formé dans chaque partie structurelle 40 de fixation, qui est destiné à recevoir une vis 50 verticale de fixation traversant un perçage 52 formé dans la patte 32 horizontale de fixation du projecteur 20.

De préférence, l'agencement comporte un moyen d'alignement de la partie 40 de fixation et de la patte 32 du projecteur afin de garantir un bon positionnement du perçage 52 en regard du taraudage 48.

Ce moyen d'alignement est constitué d'un pion 54, faisant saillie à partie de la face supérieure 46 de l'extrémité de l'élément longitudinal supérieur 16 associé, qui traverse un évidement 56 de chaque partie structurelle 40 de fixation et est reçu au moins en butée contre une face verticale 58 dudit évidement 56, et dont l'extrémité 60 est reçue dans un trou oblong 62 conforme formé dans la patte horizontale 52 de fixation du projecteur 20.

Dans le mode de réalisation préféré de l'invention, l'évidement 56 de chaque partie 40 structurelle de fixation s'étend à partir d'un bord vertical 64 de chaque partie structurelle et présente la forme générale d'un "V" dont les bords verticaux 66 se rejoignent suivant une portée verticale 58 pour former un logement de courbure correspondant sensiblement au diamètre du pion 54, la portée verticale 58 formant la face verticale de butée dudit évidement 56.

De préférence, chaque partie 40 structurelle de fixation est réalisée venue de matière avec l'élément transversal 18 par un procédé de moulage. Ceci permet de réaliser de manière aisée l'évidement 56 lors du moulage de chaque partie structurelle de fixation.

Comme l'illustre la figure 2, chaque partie 40 structurelle de fixation comporte au moins un évidement 68 en forme de cadre recevant en partie centrale un fût 70, dans lequel est réalisé le perçage 42 destiné à recevoir la vis 34 de fixation de la partie structurelle 40 sur l'élément 16 longitudinal supérieur et qui est lié par des raidisseurs 72 aux parois du cadre 68. L'évidement 68 en forme de cadre, le fût 70 et les raidisseurs 72 sont donc eux aussi issus du moulage de l'élément 18.

Avantageusement, la partie 40 de fixation structurelle comporte des moyens de fixation d'un boîtier supérieur 74 comportant un troisième moyen de fixation du point 36 de fixation du bouclier pare-chocs 22, et un quatrième moyen de fixation d'une butée 38 de fermeture du capot.

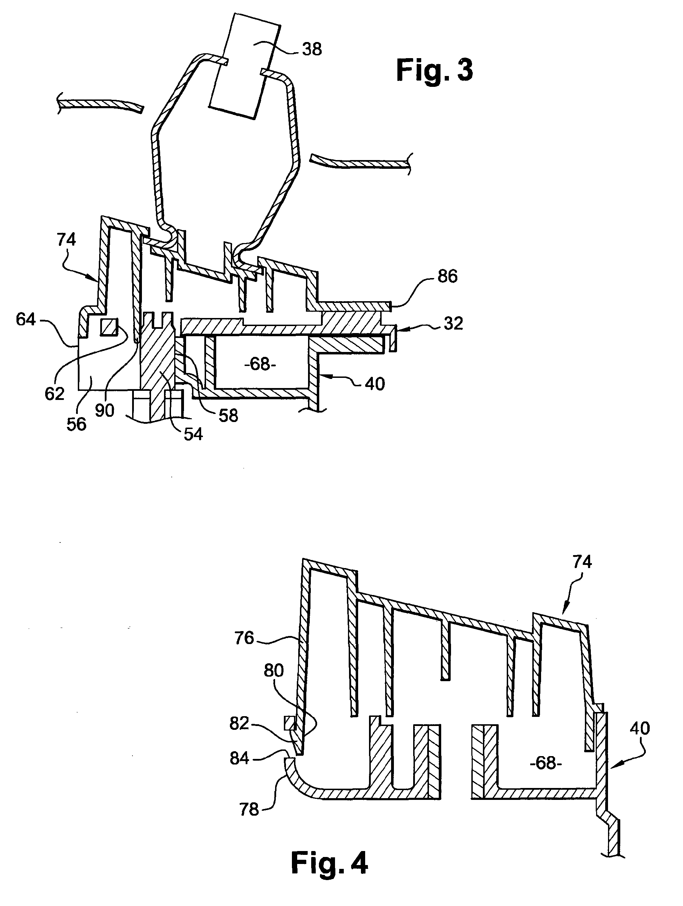

Comme l'illustre la figure 4, le boîtier supérieur 74 comporte au moins une paroi verticale 76 correspondant avec un bord 78 du cadre 68 de chaque partie structurelle de fixation opposé au taraudage 48 et les moyens de fixation du boîtier 74 supérieur sur la partie structurelle 40 de fixation comportent :
- au moins deux pattes 80 verticales élastiques inférieures, s'étendant dans le prolongement de la paroi verticale 76, dont des ergots d'extrémité 82 sont destinés être reçus dans des lumières 84 conformes formées dans le bord vertical 78 associé du cadre 68 pour permettre une fixation du boîtier supérieur 74 par emboîtement,
- au moins une patte horizontale 86 dont un perçage 88 coïncide avec le taraudage 48 et est destiné à être traversé par la vis 50 de fixation du projecteur 20,
- au moins une patte verticale 90 de mise en position, qui s'étend verticalement sous le boîtier 74 et qui est destinée à traverser le trou oblong 62 de la patte 32 de fixation du projecteur 20 pour prendre appui tangentiellement sur le pion 54.

Cette configuration permet avantageusement d'assurer une immobilisation satisfaisante du boîtier 74 sur la partie structurelle 40 de fixation.

Dans cette configuration, le troisième moyen de fixation du point de fixation 36 du bouclier pare-chocs 22 comporte une première portée constituée d'un bossage 92 qui s'étend à partir d'une face supérieure 94 du boîtier et qui comporte un taraudage 96 destiné à recevoir une vis 98 traversant un perçage 36 formé dans une paroi du bouclier pare-chocs 22.

Par ailleurs, le quatrième moyen de fixation de la butée de fermeture du capot comporte une seconde portée 100 qui s'étend sur la face supérieure 94 du boîtier 74, dont deux encoches supérieures 104 sont destinées à recevoir par emboîtement deux ergots 106 formés à l'extrémité des bras élastiques 108 d'un cavalier 110 présentant sensiblement la forme d'un U inversé qui est destiné à traverser une fenêtre conforme 102 pratiquée dans la paroi du bouclier pare-chocs 22 et dont l'extrémité 112 opposée de jonction des bras porte la butée 38 de fermeture du capot.

Ainsi, le cavalier 110 traverse la paroi du pare-chocs 22 et permet de supporter la butée 38 à une distance suffisante du pare-chocs 22 pour assurer la butée du capot. On remarquera que le cavalier 110 peut être avantageusement réalisé en un acier de type acier à ressort permettant une flexion de ses bras 108, ce qui permet de réaliser de manière très simple un amortissement du capot lorsqu'il rencontre la butée 38.

L'invention permet donc de proposer des moyens groupés de fixation d'au moins une patte 32 de fixation d'un projecteur 20, d'au moins un point 36 de fixation d'un bouclier pare-chocs 22, et d'une butée 38 de fermeture d'un capot.

## Revendications

1. Agencement (10) pour une partie avant (12) de véhicule automobile comportant au moins un élément de structure de caisse comprenant deux longerons (14) sensiblement longitudinaux intermédiaires à l'extrémité desquels est fixé un élément (18) transversal dit "face avant technique" porteur d'organes du véhicule, la partie avant portant au moins deux projecteurs (20) du véhicule, un bouclier pare-chocs (22) et deux butées (38) de fermeture d'un capot associé,
**caractérisé en ce que** l'élément transversal (18) comporte au moins deux bras supérieurs transversaux opposés (26) s'étendant à partir d'une partie centrale (21), dont l'extrémité (28) de chacun est fixée à deux éléments longitudinaux supérieurs (16) portés par des jambes (17) sensiblement verticales s'étendant à partir des longerons (14) sensiblement longitudinaux intermédiaires, et **en ce que** chaque bras supérieur (26) comporte des moyens (30) de fixation d'au moins une patte (32) de fixation d'un projecteur (20) associé, d'au moins un point de fixation (36) du bouclier pare-chocs (22), et d'une butée (38) de fermeture du capot.

2. Agencement (10) selon la revendication précédente, **caractérisé en ce que** chaque jambe verticale (17) est reliée par l'intermédiaire d'un tirant (23) sensiblement transversal à au moins un élément (25) latéral voisin de l'élément de structure de caisse du véhicule, pour éviter le flambage de ladite jambe (17).

3. Agencement (10) selon la revendication précédente, **caractérisé en ce que** le tirant (23) est agencé verticalement sous un niveau inférieur d'un projecteur (20) du véhicule.

4. Agencement (10) selon l'une des revendications 1 à 3, **caractérisé en ce que** l'extrémité (28) de chaque bras (26) comporte une partie (40) de fixation dite "structurelle" comportant des premiers moyens de fixation du bras (26) à l'extrémité de l'élément longitudinal supérieur (16) associé et des seconds moyens de fixation de la patte (32) de fixation du projecteur (20) sur le bras (26).

5. Agencement (10) selon la revendication précédente, **caractérisé en ce que** les premiers moyens de fixation du bras (26) à l'extrémité de l'élément (16) longitudinal supérieur associé comportent un perçage (42) sensiblement vertical, traversant l'extrémité de chaque partie (40) structurelle de fixation, qui est destiné à recevoir une vis (34) verticale de fixation de ladite partie structurelle de fixation sur une face supérieure (46) de l'extrémité de l'élément (16) longitudinal supérieur associé.

6. Agencement (10) selon l'une des revendications 4 ou 5, **caractérisé en ce que** les seconds moyens de fixation de la patte de fixation (32) du projecteur (20) sur le bras (26) comportent un taraudage (48) sensiblement vertical, formé dans chaque partie structurelle (40) de fixation, qui est destiné à recevoir une vis (50) verticale de fixation traversant la patte (32) horizontale de fixation du projecteur (20).

7. Agencement (10) selon l'une des revendications 4 à 6, **caractérisé en ce qu'**il comporte un moyen d'alignement de la partie (40) de fixation et de la patte (32) du projecteur (20) qui est constitué d'un pion (54), faisant saillie à partir d'une face supérieure (46) de l'extrémité de l'élément longitudinal supérieur (16) associé, qui traverse un évidement (56) de chaque partie structurelle (40) de fixation et est reçu au moins en butée contre une face verticale (58) dudit évidement (56), et dont l'extrémité (60) est reçue dans un trou oblong (62) conforme formé dans la patte horizontale (52) de fixation du projecteur (20).

8. Agencement (10) selon la revendication précédente, **caractérisé en ce que** l'évidement (56) de chaque partie (40) structurelle de fixation s'étend à partir d'un bord vertical (64) de chaque partie structurelle et présente la forme générale d'un "V" dont les bords verticaux (66) se rejoignent suivant une portée verticale (58) pour former un logement de courbure correspondant sensiblement au diamètre du pion (54), la portée verticale (58) formant la face verticale de butée dudit évidement (56).

9. Agencement (10) selon l'une des revendications 4 à 8, **caractérisé en ce que** la partie (40) de fixation structurelle comporte des moyens de fixation d'un boîtier supérieur (74) comportant un troisième moyen de fixation du point (36) de fixation du bouclier pare-chocs (22) et un quatrième moyen de fixation d'une butée (38) de fermeture du capot.

10. Agencement (10) selon l'une quelconque des revendications 6 à 9, **caractérisé en ce que** chaque partie (40) structurelle de fixation comporte au moins un évidement (68) en forme de cadre recevant en partie centrale un fût (70), dans lequel est réalisé le perçage (42) destiné à recevoir la vis (34) de fixation de la partie structurelle (40) sur l'élément (16) longitudinal supérieur et qui est lié par des raidisseurs (72) aux parois du cadre (68).

11. Agencement (10) selon la revendication précédente prise en combinaison avec la revendication 9, **caractérisé en ce que** le boîtier supérieur (74) comporte au moins une paroi verticale (76) correspondant avec un bord (78) du cadre (68) de chaque partie structurelle de fixation opposé au taraudage (48) et **en ce que** les moyens de fixation du boîtier (74) supérieur sur la partie structurelle (40) de fixation comportent :
- au moins deux pattes (80) verticales élastiques inférieures, s'étendant dans le prolongement de la paroi verticale (76), dont des ergots d'extrémité (82) sont destinés à être reçus dans des lumières (84) conformes formées dans le bord vertical (78) associé du cadre (68) pour permettre une fixation du boîtier supérieur (74) par emboîtement,
- au moins une patte horizontale (86) dont un perçage (88) coïncide avec le taraudage (48) et est destiné à être traversé par la vis (50) de fixation du projecteur (20),
- au moins une patte verticale (90) de mise en position, qui s'étend verticalement sous le boîtier (74) et qui est destinée à traverser le trou oblong (62) de la patte (32) de fixation du projecteur (20) pour prendre appui tangentiellement sur le pion (54).

12. Agencement (10) selon l'une des revendications 9 à 11, caractérisé en ce le troisième moyen de fixation du point de fixation (36) du bouclier pare-chocs (22) comporte une première portée constituée d'un bossage (92) qui s'étend à partir d'une face supérieure (94) du boîtier (74) et qui comporte un taraudage (96) destiné à recevoir une vis (98) traversant un perçage (36) formé dans une paroi du bouclier pare-chocs (22).

13. Agencement (10) selon la revendication précédente, **caractérisé en ce que** le quatrième moyen de fixation de la butée de fermeture du capot comporte une seconde portée (100) qui s'étend sur la face supérieure (94) du boîtier (74), dont deux encoches supérieures (104) sont destinées à recevoir par emboîtement deux ergots (106) formés à l'extrémité des bras élastiques (108) d'un cavalier (110) présentant sensiblement la forme d'un "U" inversé qui est destiné à traverser une fenêtre conforme (102) pratiquée dans la paroi du bouclier pare-chocs (22) et dont l'extrémité (112) opposée de jonction des bras porte la butée (38) de fermeture du capot.

## Patentansprüche

1. Anordnung (10) für ein Vorderteil (12) eines Kraftfahrzeugs, das mindestens ein Karosserie-Strukturelement aufweist, welches zwei im Wesentlichen längs verlaufende Zwischenlängsträger (14) enthält, an deren Ende ein "Frontendmodul" genanntes Querelement (18) befestigt ist, das Organe des Fahrzeugs trägt, wobei das Vorderteil mindestens zwei Scheinwerfer (20) des Fahrzeugs, eine Stoßstangenabdeckung (22) und zwei Schließanschläge (38) einer zugeordneten Haube trägt,
**dadurch gekennzeichnet, dass** das Querelement (18) mindestens zwei gegenüberliegende obere Querarme (26) trägt, die sich ausgehend von einem zentralen Bereich (21) erstrecken, wobei das Ende (28) jedes von ihnen an zwei oberen Längselementen (16), die von sich ausgehend von den im Wesentlichen längs verlaufenden Zwischenlängsträgern (14) erstreckenden im Wesentlichen senkrechten Schenkeln (17) getragen werden, befestigt ist, und dass jeder obere Arm (26) Einrichtungen (30) zur Befestigung mindestens einer Befestigungslasche (32) eines zugeordneten Scheinwerfers (20), mindestens eines Befestigungspunkts (36) der Stoßstangenabdeckung (22) und eines Schließanschlags (38) der Haube aufweist.

2. Anordnung (10) nach dem vorhergehenden Anspruch, **dadurch gekennzeichnet, dass** jeder senkrechte Schenkel (17) mittels eines im Wesentlichen quer ver laufenden Zugstabs (23) mit mindestens einem seitlichen Element (25) neben dem Karosserie-Strukturelement des Fahrzeugs verbunden ist, um ein Ausknicken des Schenkels (17) zu verhindern.

3. Anordnung (10) nach dem vorhergehenden Anspruch, **dadurch gekennzeichnet, dass** der Zugstab (23) senkrecht unter einem Unterbereich eines Scheinwerfers (20) des Fahrzeugs angeordnet ist.

4. Anordnung (10) nach einem der Ansprüche 1 bis 3, **dadurch gekennzeichnet, dass** das Ende (28) jedes Arms (26) einen so genannten "strukturellen" Befestigungsbereich (40) aufweist, der erste Befestigungseinrichtungen des Arms (26) am Ende des zugeordneten oberen Längselements (16) und zweite Befestigungseinrichtungen der Befestigungslasche (32) des Scheinwerfers (20) am Arm (26) aufweist.

5. Anordnung (10) nach dem vorhergehenden Anspruch, **dadurch gekennzeichnet, dass** die ersten Befestigungseinrichtungen des Arms (26) am Ende des zugeordneten oberen Längselements (16) eine im Wesentlichen senkrechte Bohrung (42) aufweisen, die das Ende jedes strukturellen Befestigungsbereichs (40) durchquert, die dazu bestimmt ist, eine senkrechte Schraube (34) zur Befestigung des strukturellen Befestigungsbereichs an einer Oberseite (46) des Endes des zugeordneten Längselements (16) aufzunehmen.

6. Anordnung (10) nach einem der Ansprüche 4 oder 5, **dadurch gekennzeichnet, dass** die zweiten Befestigungseinrichtungen der Befestigungslasche (32) des Scheinwerfers (20) am Arm (26) ein im Wesentlichen senkrechtes Innengewinde (48) aufweisen, das in jedem strukturellen Befestigungsbereich (40) geformt ist, das dazu bestimmt ist, eine senkrechte Befestigungsschraube (50) aufzunehmen, die die waagrechte Befestigungslasche (32) des Scheinwerfers (20) durchquert.

7. Anordnung (10) nach einem der Ansprüche 4 bis 6, **dadurch gekennzeichnet, dass** sie eine Einrichtung zur fluchtenden Ausrichtung des Befestigungsbereichs (40) und der Lasche (32) des Scheinwerfers (20) aufweist, die aus einem Zapfen (54) besteht, der ausgehend von einer Oberseite (46) des Endes des zugeordneten oberen Längselements (16) vorsteht, der eine Aussparung (56) jedes strukturellen Befestigungsbereichs (40) durchquert und mindestens in Anschlag gegen eine senkrechte Seite (58) der Aussparung (56) aufgenommen wird, und dessen Ende (60) in einem entsprechenden Langloch (62) aufgenommen wird, das in der waagrechten Befestigungslasche (52) des Scheinwerfers (20) geformt ist.

8. Anordnung (10) nach dem vorhergehenden Anspruch, **dadurch gekennzeichnet, dass** die Aussparung (56) jedes strukturellen Befestigungsbereichs (40) sich ausgehend von einem senkrechten Rand (64) jedes strukturellen Bereichs erstreckt und die allgemeine Form eines "V" hat, dessen senkrechte Ränder (66) sich entlang einer senkrechten Auflagefläche (58) verbinden, um eine Aufnahme mit einer Krümmung zu formen, die im Wesentlichen dem Durchmesser des Zapfens (54) entspricht, wobei die senkrechte Auflagefläche (58) die senkrechte Anschlagseite der Aussparung (56) formt.

9. Anordnung (10) nach einem der Ansprüche 4 bis 8, **dadurch gekennzeichnet, dass** der strukturelle Befestigungsbereich (40) Befestigungseinrichtungen eines oberen Gehäuses (74) aufweist, die eine dritte Befestigungseinrichtung des Befestigungspunkts (36) der Stoßstangenabeckung (22) und eine vierte Befestigungseinrichtung eines Schließanschlags (38) der Haube aufweisen.

10. Anordnung (10) nach einem der Ansprüche 6 bis 9, **dadurch gekennzeichnet, dass** jeder strukturelle Befestigungsbereich (40) mindestens eine Aussparung (68) in Form eines Rahmens aufweist, der im zentralen Bereich einen Schaft (70) aufnimmt, in dem die Bohrung (42) ausgeführt ist, die dazu bestimmt ist, die Befestigungsschraube (34) des strukturellen Bereichs (40) am oberen Längselement (16) aufzunehmen, und der durch Stützverstrebungen (72) mit den Wänden des Rahmens (68) verbunden ist.

11. Anordnung (10) nach dem vorhergehenden Anspruch in Kombination mit Anspruch 9, **dadurch gekennzeichnet, dass** das obere Gehäuse (74) mindestens eine senkrechte Wand (76) aufweist, die einem Rand (78) des Rahmens (68) jedes strukturellen Befestigungsbereichs entgegengesetzt zum Innengewinde (48) entspricht, und dass die Befestigungseinrichtungen des oberen Gehäuses (74) am strukturellen Befestigungsbereich (40) aufweisen:
- mindestens zwei untere elastische senkrechte Laschen (80), die sich in der Verlängerung der senkrechten Wand (76) erstrecken, deren Endvorsprünge (82) dazu bestimmt sind, in entsprechenden Schlitzlöchern (84) aufgenommen zu werden, die im zugeordneten senkrechten Rand (78) des Rahmens (68) geformt sind, um eine Befestigung des oberen Gehäuses (74) durch Ineinanderfügen zu erlauben,
- mindestens eine waagrechte Lasche (86), von der eine Bohrung (88) mit dem Innengewinde (48) zusammenfällt und dazu bestimmt ist, von der Befestigungsschraube (50) des Scheinwerfers (20) durchquert zu werden,
- mindestens eine senkrechte Positionierlasche (90), die sich senkrecht unter dem Gehäuse (74) erstreckt und dazu bestimmt ist, das Langloch (62) der Befestigungslasche (32) des Scheinwerfers (20) zu durchqueren, um sich tangential auf den Zapfen (54) aufzulegen.

12. Anordnung (10) nach einem der Ansprüche 9 bis 11, **dadurch gekennzeichnet, dass** die dritte Befestigungseinrichtung des Befestigungspunkts (36) der Stoßstangenabeckung (22) eine erste Auflagefläche aufweist, die aus einem Buckel (92) besteht, der sich ausgehend von einer Oberseite (94) des Gehäuses (74) erstreckt und ein Innengewinde (96) aufweist, das dazu bestimmt ist, eine Schraube (98) aufzunehmen, die eine Bohrung (36) durchquert, die in einer Wand der Stoßstangenabeckung (22) geformt ist.

13. Anordnung (10) nach dem vorhergehenden Anspruch, **dadurch gekennzeichnet, dass** die vierte Befestigungseinrichtung des Schließanschlags der Haube eine zweite Auflagefläche (100) aufweist, die sich auf der Oberseite (94) des Gehäuses (74) erstreckt, von der zwei obere Einkerbungen (104) dazu bestimmt sind, durch Ineinanderfügen zwei Vorsprünge (106) aufzunehmen, die am Ende der elastischen Arme (108) eines Bügels (110) geformt sind, der im Wesentlichen die Form eines umgedrehten "U" hat, der dazu bestimmt ist, ein entsprechendes Fenster (102) zu durchqueren, das in der Wand der Stoßstangenabeckung (22) ausgespart ist, und dessen gegenüberliegendes Ende (112) zur Verbindung der Arme den Schließanschlag (38) der Haube trägt.

## Claims

1. Arrangement (10) for a front portion (12) of a motor vehicle comprising at least one structural box element comprising two substantially longitudinal intermediate beams (14) at the end of which is attached a transverse element (18) called "technical front face" supporting members of the vehicle, the front portion supporting at least two headlights (20) of the vehicle, one bumper cowling (22) and two stops (38) for the closure of an associated hood,
**characterized in that** the transverse element (18) comprises at least two opposite transverse upper arms (26) extending from a central portion (21), the end (28) of each of which is attached to two upper longitudinal elements (16) supported by substantially vertical legs (17) extending from the substantially longitudinal intermediate beams (14), and **in that** each upper arm (26) comprises means (30) for attaching at least one lug (32) for attaching an associated headlight (20), at least one attachment point (36) for the bumper cowling (22) and one stop (38) for closing the hood.

2. Arrangement (10) according to the preceding claim, **characterized in that** each vertical leg (17) is connected by means of a substantially transversal tie-rod (23) to at least one adjacent lateral element (25) of the structural box element of the vehicle in order to prevent said leg (17) from deforming.

3. Arrangement (10) according to the preceding claim, **characterized in that** the tie-rod (23) is arranged vertically beneath a lower level of a headlight (20) of the vehicle.

4. Arrangement (10) according to one of Claims 1 to 3, **characterized in that** the end (28) of each arm (26) comprises an attachment portion (40) called "structural" comprising first means for attaching the arm (26) to the end of the associated upper longitudinal element (16) and second means for attaching the lug (32) for attaching the headlight (20) to the arm (26).

5. Arrangement (10) according to the preceding claim, **characterized in that** the first means for attaching the arm (26) to the end of the associated upper longitudinal element (16) comprise a substantially vertical hole (42) passing through the end of each structural attachment portion (40), which is designed to receive a vertical screw (34) for attaching said structural attachment portion to an upper face (46) of the end of the associated upper longitudinal element (16).

6. Arrangement (10) according to one of Claims 4 and 5, **characterized in that** the second means for attaching the lug (32) for attaching the headlight (20) to the arm (26) comprise a substantially vertical tapping (48) formed in each structural attachment portion (40), which is designed to receive a vertical attachment screw (50) passing through the horizontal lug (32) for attaching the headlight (20).

7. Arrangement (10) according to one of Claims 4 to 6, **characterized in that** it comprises a means for aligning the attachment portion (40) and the lug (32) of the headlight (20) which consists of a post (54) protruding from an upper face (46) of the end of the associated upper longitudinal element (16), which passes through a recess (56) of each structural attachment portion (40) and is received at least in abutment against a vertical face (58) of said recess (56) and of which the end (60) is received in a matching oblong hole (62) formed in the horizontal lug (52) for attaching the headlight (20).

8. Arrangement (10) according to the preceding claim, **characterized in that** the recess (56) of each structural attachment portion (40) extends from a vertical edge (64) of each structural portion and has the general shape of a "V" of which the vertical edges (66) join together along a vertical bearing surface (58) in order to form a housing of curvature corresponding substantially to the diameter of the post (54), the vertical bearing surface (58) forming the vertical abutment face of said recess (56).

9. Arrangement (10) according to one of Claims 4 to 8, **characterized in that** the structural attachment portion (40) comprises means for attaching an upper casing (74) comprising a third means for attaching the point (36) for attaching the bumper cowling (22) and a fourth means for attaching a stop (38) for closing the hood.

10. Arrangement (10) according to any one of Claims 6 to 9, **characterized in that** each structural attachment portion (40) comprises at least one recess (68) in the form of a frame receiving in the central portion a barrel (70) in which the hole (42) is made that is designed to receive the screw (34) for attaching the structural portion (40) to the upper longitudinal element (16) and which is linked by stiffeners (72) to the walls of the frame (68).

11. Arrangement (10) according to the preceding claim taken in combination with Claim 9, **characterized in that** the upper casing (74) comprises at least one vertical wall (76) corresponding with an edge (78) of the frame (68) of each structural attachment portion opposite to the tapping (48) and **in that** the means for attaching the upper casing (74) to the structural attachment portion (40) comprise:
- at least two lower elastic vertical lugs (80) extending in line with the vertical wall (76), of which end spigots (82) are designed to be received in matching apertures (84) formed in the associated vertical edge (78) of the frame (68) in order to allow the upper casing (74) to be attached by fitting together,
- at least one horizontal lug (86) of which a hole (88) coincides with the tapping (48) and is designed for the screw (50) for attaching the headlight (20) to pass through,
- at least one vertical positioning lug (90), which extends vertically under the casing (74) and which is designed to pass through the oblong hole (62) of the lug (32) for attaching the headlight (20) in order to rest tangentially on the post (54).

12. Arrangement (10) according to one of Claims 9 to 11, **characterized in that** the third means for attaching the attachment point (36) of the bumper cowling (22) comprises a first bearing surface consisting of a boss (92) which extends from an upper face (94) of the casing (74) and which comprises a tapping (96) designed to receive a screw (98) passing through a hole (36) formed in a wall of the bumper cowling (22).

13. Arrangement (10) according to the preceding claim, **characterized in that** the fourth means for attaching the stop for closing the hood comprises a second bearing surface (100) which extends along the upper face (94) of the casing (74), in which two upper notches (104) are designed to receive by fitting together two spigots (106) formed at the end of the elastic arms (108) of a clip (110) having substantially the shape of an inverted "U" which is designed to pass through a matching window (102) made in the wall of the bumper cowling (22) and in which the opposite end (112) for joining the arms supports the stop (38) for closing the hood.
